# EUROPEAN PATENT APPLICATION

(11) **EP 4 435 020 A1**
(43) Date of publication of application: **25.09.2024**
(21) Application number: 24162623.3
(22) Date of filing: 11.03.2024
(51) Int. Cl.: C08F 220/18, C08F 220/20, C09J 133/06

(54) **OPTICALLY TRANSPARENT ADHESIVE COMPOUND, PROCESS FOR PRODUCING IT, ADHESIVE TRANSFER TAPE COMPRISING THE ADHESIVE COMPOUND AND USE OF THE ADHESIVE COMPOUND**

(30) Priority: 23.03.2023 DE 102023107339
(71) Applicant: TESA SE, 22848 Norderstedt (DE)
(72) Inventor: ROMPF, Julia, 22848 Norderstedt (DE); KRETZMER, Ralf, 22848 Norderstedt (DE); FISCHER, Alexander, 22848 Norderstedt (DE); ELLRINGMANN, Dr. Kai, 22848 Norderstedt (DE); WEDEL, Dr. Bastian, 22848 Norderstedt (DE)
(74) Representative: tesa SE

(57) **Abstract**

The present invention relates to an optically transparent adhesive compound, to a process for producing it and to an adhesive transfer tape comprising the adhesive compound. The present invention also relates to the use of the adhesive compound.

In accordance with the invention is an optically transparent adhesive compound for bonding displays, holographic optical elements, lenses and glasses,
wherein the adhesive compound contains 80 to 100% by weight of at least one (meth)acrylate-containing copolymer A,
wherein the copolymer A is composed of 15 to 95% by weight of linear alkyl (meth)acrylate monomers, wherein the number of carbon atoms of the alkyl radicals of the linear alkyl (meth)acrylate monomers is 6 to 10, preferably 7 to 10,
wherein the copolymer A is composed of 5 to 30% by weight of hydroxy group-containing (meth)acrylate monomers,
and wherein the adhesive compound has a haze value of less than 5%, preferably 0% to less than 1%, and a transmission at 400 nm to 800 nm of more than 90%, preferably more than 95%, more preferably 98 to 100%, very preferably more than 99 to 100%, each measured according to ASTM D1003-13.

## Description

The present invention relates to an optically transparent adhesive compound, to a process for producing it and to an adhesive transfer tape comprising the adhesive compound. The present invention also relates to the use of the adhesive compound.

Optically transparent adhesive compounds are known to the skilled person. These are adhesive compounds with a high transmission, especially in the visible range of the wavelength of the electromagnetic spectrum. In addition to their stickiness, the adhesive compounds are suitable for bonding articles and components whose optical characteristics are relevant - especially in their typical use.

WO 2018102179 A1, US 9127188 B2 and US 10640689 B2, for example, reveal optically transparent adhesive compounds and films.

A particular challenge is to ensure sufficient stickiness on sensitive substrates, such as corrosion-sensitive substrates in particular.

The present invention has for its object to provide an optically transparent adhesive compound and an adhesive transfer tape which, compared to the prior art, have an improved adhesion, especially on glass and corrosion-sensitive substrates, such as indium tin oxide or silver, for example. In addition, the optical properties should not be negatively affected.

The adhesive compound or adhesive transfer tape should therefore be suitable for bonding articles or components in the case of which optical properties are used. These can be installed in electronic devices and/or in motor vehicles, in particular. Such articles or components may in particular be displays, holographic optical elements, lenses and switchable glasses. In this context, the adhesive compound or the adhesive tape should not adversely affect the optical properties and the optical characteristics of the articles or components.

The adhesive compound and the adhesive tape should also be easy to process and produce.

According to the invention, the object is achieved by the optically transparent adhesive compound according to Claim 1, the process for producing it according to Claim 11 and the adhesive transfer tape according to Claim 12. Furthermore, the object is achieved by the use of the adhesive compound according to Claim 14.

Other subjects of the invention are the adhesive compound which is produced according to the process of the invention and the use of the adhesive compound produced in the invention and of the adhesive transfer tape of the invention for bonding articles or components in electronic devices and/or in motor vehicles, such as more particularly displays, holographic optical elements, lenses and glasses.

The adhesive compound of the invention is characterized as optically transparent by the specifying of the haze value of less than 5%, preferably 0% to less than 1%, and the transmission at 400 nm to 800 nm of more than 90%, preferably more than 95%, more preferably 98 to 100%, very preferably more than 99 to 100%, each measured according to ASTM D1003-13. The detailed description of the measurement of the transmission and the haze value according to ASTM D1003-13 is given in the Test Methods section.

With the preferred and more preferred values for the haze and the transmission, particularly advantageous optical properties are achieved, in particular for the use for bonding articles or components in electronic devices and/or in motor vehicles, such as more particularly displays, holographic optical elements, lenses and glasses, wherein the adhesive compound at the same time has a high adhesion.

According to the invention, the adhesive compound contains 80 to 100% by weight of at least one (meth)acrylate-containing copolymer A,
wherein the copolymer A is composed of 15 to 95% by weight of linear alkyl (meth)acrylate monomers, wherein the number of carbon atoms of the alkyl radicals of the linear alkyl (meth)acrylate monomers is 6 to 10, preferably 7 to 10, and
wherein the copolymer A is composed of 5 to 30% by weight of hydroxy group-containing (meth)acrylate monomers.

Surprisingly, this gives the optically transparent adhesive compound of the invention an improvement in adhesion, in particular on glass. Thereby, the adhesive compound can be used for bonding articles or components in electronic devices and/or in motor vehicles, such as more particularly displays, holographic optical elements, lenses and glasses, and can contribute to their durability and longevity even after unwanted exposure to force.

Embodiments which are hereinafter designated as preferred are combined in more preferred embodiments with features of other embodiments designated as preferred or advantageous. Very preferred are thus combinations of two or more of the embodiments designated hereinafter as more preferred. Also preferred are embodiments in which a feature of an embodiment which is designated in any degree as preferred is combined with one or more further features of other embodiments which are designated in any degree as preferred.

The adhesive compound of the invention is particularly well suited to bonding corrosion-sensitive substrates. The adhesive compound of the invention is for this purpose in particular an acid-free adhesive compound.

For this purpose, it is preferred that the copolymer A is composed of 0 to a maximum of 0.5% by weight, preferably 0 to a maximum of 0.3% by weight, more preferably 0% by weight, of acid monomers, such as in particular (meth)acrylic acid and photoacids, such as triarylsulfonium hexafluorophosphate. These quantities refer to the total mass of monomers of the copolymer A and represent total amounts of acids. The total amount of acid monomers in the polymer A is thus preferably 0 to a maximum of 0.5% by weight, preferably 0 to a maximum of 0.3% by weight, more preferably 0% by weight.

Photoacids are known to the skilled person. These are, in particular, acid-generating monomers (photoacid generators) that can be activated by means of UV radiation. Triarylsulfonium hexafluorophosphate is identified illustratively as a representative of this class.

In preferred embodiments in which a preferred amount of acids or acid monomers is stated, these are the total amounts of acids, referring to all acids and in particular methacrylic acid, acrylic acid and photoacids, such as triarylsulfonium hexafluorophosphate.

Furthermore, it is preferred that the adhesive compound of the invention contains 0 to a maximum of 0.5% by weight, preferably 0 to a maximum of 0.3% by weight, more preferably 0% by weight, of free acids, such as in particular (meth)acrylic acid and photoacids.

The adhesive compound of the invention contains 80 to 100% by weight of at least one (meth)acrylate-containing copolymer A, wherein the copolymer A is composed of 15 to 95% by weight of linear alkyl (meth)acrylate monomers having a number of C atoms in the alkyl radical of 6 to 10, preferably 7 to 10, and of 5 to 30% by weight of hydroxy group-containing (meth)acrylate monomers.

For the sake of simplicity, the term "C atoms" is used synonymously for carbon atoms in the context of the present invention.

The quantities for the copolymer A in the adhesive compound of the invention refer to the total amount of copolymers A which have the corresponding monomers and properties, unless otherwise indicated.

At the lower limit of 80% by weight, up to 20% by weight of additives are contained in addition to copolymers A, such as more particularly crosslinkers, plasticizers, resins and/or multifunctional ((meth)acrylate) monomers, the latter being not incorporated into the polymer chains of the copolymer(s) A, but possibly being activated optionally downstream by means of UV light, causing post-crosslinking to take place.

The adhesive compound of the invention can contain up to 100% by weight of the at least one (meth)acrylate-containing copolymer A. In the event that it contains exactly 100% by weight of at least one (meth)acrylate-containing copolymer A, it consists of this or these copolymer(s) A. In this case, in particular, no crosslinker is added to the adhesive compound. It can be produced, for example, by means of extrusion processes.

In the event that the adhesive compound of the invention is produced not by extrusion but by means of a process using at least one crosslinker, the total amount of copolymers A is preferably 80 to 99.95% by weight.

The term "composed of monomers" is understood within the scope of the present invention to mean that the copolymer is based on the polymerization of the more closely specified monomers, which is expressed in the substeps a) and b) of the process of the invention for producing the adhesive compound.

The term "(meth)acrylate-containing copolymer" is understood within the scope of the present invention to mean a polymer based on at least two different monomer types, at least one of which is a (meth)acrylate, i.e. an acrylate or a methacrylate. Since the copolymer A in the invention is composed of 15 to 95% by weight of linear alkyl (meth)acrylate monomers, wherein the number of carbon atoms of the alkyl radicals of the linear alkyl (meth)acrylate monomers is 6 to 10, preferably 7 to 10, and of 5 to 30% by weight of hydroxy group-containing (meth)acrylate monomers, the stated criterion is already met.

The quantities of the respective monomer types refer to the total amount of the respective monomer types in the copolymer A.

Preferably, the number of carbon atoms of the alkyl radicals of the linear alkyl (meth)acrylate monomers is 7 to 10. With this, the object underlying the invention is particularly well achieved. According to preferred embodiments of the invention, the copolymer A is composed of 15 to 95% by weight of linear alkyl (meth)acrylate monomers, wherein the linear alkyl (meth)acrylate monomer is selected from the group consisting of n-heptyl acrylate, n-heptyl methacrylate, n-octyl methacrylate and n-octyl acrylate.

This may also be a mixture of the linear (meth)acrylates identified.

According to preferred embodiments, however, the copolymer is composed of only one monomer type from the stated group.

Particularly preferred in this context is the monomer n-octyl acrylate.

This results in particularly high adhesion forces of the adhesive compound of the invention, especially on glass. At the same time, the adhesive compound of the invention is particularly suitable for corrosion-sensitive substrates.

According to further preferred embodiments of the invention, copolymer A is composed of 15 to 95% by weight of linear alkyl (meth)acrylate monomers, wherein the linear alkyl (meth)acrylate monomers are a mixture of at least two different linear alkyl (meth)acrylate monomers having a number of carbon atoms of the alkyl radicals of 6 to 10, preferably 7 to 10. A mixture of n-octyl acrylate and n-decyl acrylate is particularly preferred here.

According to preferred embodiments of the invention, the copolymer A is composed of 15 to 85% by weight, more preferably of 30 to 80% by weight, very preferably of 30 to 55% by weight of linear alkyl (meth)acrylate monomers, wherein the number of carbon atoms of the alkyl radical of the linear alkyl (meth)acrylate monomers is 6 to 10, preferably 7 to 10.

With the stated weight proportions of the more closely specified linear alkyl (meth)acrylate monomers, a particularly advantageous property profile and at the same time a particularly high adhesive strength of the adhesive compound of the invention are achieved.

The stated preferred and more preferred amounts of the linear alkyl (meth)acrylate monomers also apply to the preferred embodiments with regard to the monomer types, i.e. for example with regard to the number of carbon atoms and whether two or more monomers are used in the mixture.

According to more preferred embodiments of the invention, the copolymer A is composed of 20 to 60% by weight of n-octyl acrylate. This results in particularly high adhesion forces of the adhesive compound of the invention, especially on glass. At the same time, the adhesive compound of the invention is particularly suitable for corrosion-sensitive substrates. According to more preferred embodiments of the invention, the copolymer A is composed of 45 to 55% by weight, in particular and for example 50% by weight, of n-octyl acrylate. This results in particularly high adhesion forces of the adhesive compound of the invention, especially on glass. At the same time, the adhesive compound of the invention is particularly suitable for corrosion-sensitive substrates.

According to preferred embodiments, the copolymer A is composed of 8 to 30% by weight, more preferably of 8 to 25% by weight, of hydroxy group-containing (meth)acrylate monomers. By this means, the underlying object of the invention is particularly well achieved.

According to preferred embodiments, the copolymer A is composed of 15 to 25% by weight, more preferably of 18 to 22% by weight, of hydroxy group-containing (meth)acrylate monomers. By this means, the underlying object of the invention is particularly well achieved.

Furthermore, particularly at 8 to 12% by weight in combination with a targeted selection of the one or more other comonomer types, very good processability and at the same time high adhesion are the result.

It is advantageous in this case if, as observed below, the copolymer A is not composed of monomers the homopolymer of which has a glass transition temperature of more than 50°C and is composed preferably of a maximum of 5% by weight, more preferably a maximum of 2% by weight, in turn preferably of 0% by weight, of isobornyl acrylate (IBOA), isobornyl methacrylate, methyl methacrylate, tert-butyl acrylate (t-BA), tert-butyl methacrylate, N,N-dimethylacrylamide (DMAA), dihydrodicyclopentadienyl acrylate, benzyl methacrylate, cyclohexyl methacrylate, ethyl methacrylate, isobutyl methacrylate, tert-butylcyclohexyl methacrylate, alpha-methylstyrene, itaconic anhydride, maleic anhydride, N-tert-butylacrylamide, N-vinylcaprolactam, N-vinylpyrrolidone, styrene and acrylamide.

Preferably, the hydroxy group-containing (meth)acrylate monomer is a hydroxyalkyl (meth)acrylate. In addition to the acrylate radical H₂C=C-C(=O) or methacryloyl radical, such a molecule has an alkyl radical which has at least one hydroxy group.

Preferably, the number of carbon atoms of the alkyl radical here is 2 to 25, preferably 2 to 20, more preferably 2 to 10.

According to preferred embodiments of the invention, the hydroxy group-containing (meth)acrylate monomer is selected from the group consisting of 4-hydroxybutyl acrylate, 2-hydroxyethyl acrylate, 2-hydroxypropyl acrylate, 2-hydroxybutyl acrylate, 2-hydroxyethyl methacrylate, 2-hydroxypropyl methacrylate, 2-hydroxybutyl methacrylate, 2-hydroxyisopropyl acrylate, 2-hydroxyethylacrylamide, N-hydroxypropylacrylamide. This achieves good adhesion. At the same time, owing to the comparatively high effective polarity of these copolymerized monomers, the adhesive compound can absorb moisture well and unwanted clouding due to moisture precipitation (whitening) is avoided.

According to particularly preferred embodiments of the invention, the hydroxy group-containing (meth)acrylate monomer is an acrylate monomer and selected from the group consisting of
4-hydroxybutyl acrylate, 2-hydroxyisopropyl acrylate and 2-hydroxyethyl acrylate. This achieves particularly good adhesion. At the same time, owing to the comparatively high effective polarity of these copolymerized monomers, the adhesive compound can absorb moisture particularly well and unwanted clouding due to moisture precipitation (whitening) is avoided.

The hydroxy group-containing acrylate monomer is very preferably
4-hydroxybutyl acrylate, because this produces a particularly good property profile.

According to preferred embodiments of the invention, the copolymer A is composed of further monomers in addition to the monomers described.

According to preferred embodiments of the invention, the copolymer A is composed of 5 to 25, preferably 5 to 20% by weight, more preferably 5 to 12% by weight of monomers selected from the group consisting of lauryl acrylate and stearyl acrylate. This achieves an optimal and not too high glass transition temperature of copolymer A while maintaining mechanical stability. This makes it particularly easy to process the adhesive compound. At more than 20% by weight of the stated monomers, an unwanted side-chain crystallization may occur, potentially causing the adhesive compound to suffer loss in its transparent properties.

According to preferred embodiments of the invention, the copolymer A is composed of 10 to 70% by weight, preferably 25 to 60% by weight, of monomers selected from the group consisting of n-butyl acrylate (n-BA), ethylhexyl acrylate (EHA), propylheptyl acrylate (PHA), ethyldiglycol acrylate (EDGA), di(ethylene glycol) 2-ethylhexyl ether acrylate EH(EO)EA, heptadecyl acrylate (iso-C17 acrylate). This achieves a particularly good property profile comprising the adhesive strength, in particular on glass, of the adhesive compound, in particular since an optimal glass transition temperature of the copolymer A is thereby achieved. The stated weight proportions represent total amounts of monomers of the stated group.

According to preferred embodiments of the invention, the copolymer A is composed of a total of 5% by weight of monomers the homopolymer of which has a glass transition temperature of more than 50°C. The copolymer A is preferably composed of a maximum of 5% by weight, more preferably a maximum of 2% by weight, in turn preferably 0% by weight, of monomers which are selected from the group consisting of isobornyl acrylate (IBOA), isobornyl methacrylate, methyl methacrylate, tert-butyl acrylate (t-BA), tert-butyl methacrylate, N,N-dimethylacrylamide (DMAA), dihydrodicyclopentadienyl acrylate, benzyl methacrylate, cyclohexyl methacrylate, ethyl methacrylate, isobutyl methacrylate, tert-butylcyclohexyl methacrylate, alpha-methylstyrene, itaconic anhydride, maleic anhydride, N-tert-butylacrylamide, N-vinylcaprolactam, N-vinylpyrrolidone, styrene and acrylamide. This prevents the glass transition temperature of the copolymer A from being too high. Surprisingly, this results in a high shock resistance and processability of the adhesive compound and the adhesive tape.

The quantities indicated represent total amounts of monomers the homopolymer of which has a glass transition temperature of more than 50°C, or of the stated group.

Identified below are more-preferred embodiments of copolymer A which could be identified and with which the object underlying the invention is particularly well achieved.

According to more-preferred embodiments of the invention, the copolymer A is composed of 30 to 50% by weight, preferably 35 to 45% by weight, of n-butyl acrylate (n-BA), and
40 to 60% by weight, preferably 45 to 55% by weight, of octyl acrylate (n-OA), and
5 to 15% by weight, preferably 8 to 12% by weight, of 4-hydroxybutyl acrylate (HBA), and
0% by weight of acid monomers. By this means, the underlying object of the invention is particularly well achieved and a high adhesion of the adhesive compound or the adhesive tape, in particular on glass, is realized. Furthermore, the adhesive compound is particularly well suited for bonding corrosion-sensitive components, in particular comprising indium tin oxide and/or silver.

According to further preferred embodiments of the invention, the copolymer A is composed of
20 to 35% by weight, preferably 25 to 35% by weight, of n-butyl acrylate (n-BA), and
40 to 60% by weight, preferably 45 to 55% by weight, of octyl acrylate (n-OA), and
15 to 25% by weight, preferably 18 to 22% by weight, of 4-hydroxybutyl acrylate (HBA), and
0% by weight of acid monomers. Thus, the underlying object of the invention is particularly well achieved and a particularly high adhesion of the adhesive compound or the adhesive tape, in particular on glass, is realized. Furthermore, the adhesive compound is particularly well suited for bonding corrosion-sensitive components, in particular comprising indium tin oxide and/or silver.

According to further preferred embodiments of the invention, the copolymer A is composed of
30 to 50% by weight, preferably 35 to 45% by weight, of n-butyl acrylate (n-BA), and
5 to 15% by weight, preferably 8 to 12% by weight, of 4-hydroxybutyl acrylate (HBA), and
20 to 40% by weight, preferably 25 to 35% by weight, of propylheptyl acrylate (PHA), and
15 to 25% by weight, preferably 18 to 22% by weight, of n-octyl acrylate (n-OA) and
0% by weight of acid monomers. Thus, the underlying object of the invention is particularly well achieved and a particularly high adhesion of the adhesive compound or the adhesive tape, in particular on glass, is realized. Furthermore, the adhesive compound is particularly well suited for bonding corrosion-sensitive components, in particular comprising indium tin oxide and/or silver.

According to more-preferred embodiments of the invention, the copolymer A is composed of
10 to 30% by weight, preferably 15 to 25% by weight, of n-butyl acrylate (n-BA), and
40 to 60% by weight, preferably 45 to 55% by weight, of octyl acrylate (n-OA), and
5 to 15% by weight, preferably 8 to 12% by weight, of 4-hydroxybutyl acrylate (HBA), and
10 to 30% by weight, preferably 15 to 25% by weight, of 2-ethylhexyl acrylate (2-EHA), and
0% by weight of acid monomers. By this means, the underlying object of the invention is particularly well achieved and a high adhesion of the adhesive compound or the adhesive tape, in particular on glass, is realized. Furthermore, the adhesive compound is particularly well suited for bonding corrosion-sensitive components, in particular comprising indium tin oxide and/or silver.

According to more-preferred embodiments of the invention, the copolymer A is composed of
10 to 30% by weight, preferably 15 to 25% by weight, of n-butyl acrylate (n-BA), and
15 to 25% by weight, preferably 18 to 22% by weight, of octyl acrylate (n-OA), and
5 to 15% by weight, preferably 8 to 12% by weight, of 4-hydroxybutyl acrylate (HBA), and
20 to 40% by weight, preferably 25 to 35% by weight, of propylheptyl acrylate (PHA), and
15 to 25% by weight, preferably 18 to 22% by weight, of ethyldiglycol acrylate (EDGA) and
0% by weight of acid monomers. By this means, the underlying object of the invention is particularly well achieved and a high adhesion of the adhesive compound or the adhesive tape, in particular on glass, is realized. Furthermore, the adhesive compound is particularly well suited for bonding corrosion-sensitive components, in particular comprising indium tin oxide and/or silver.

According to more-preferred embodiments of the invention, the copolymer A is composed of
20 to 40% by weight, preferably 25 to 35% by weight, of 2-ethylhexyl acrylate (2-EHA), and
20 to 40% by weight, preferably 25 to 35% by weight, of octyl acrylate (n-OA), and
5 to 15% by weight, preferably 7 to 12% by weight, of 4-hydroxybutyl acrylate (HBA), and
15 to 30% by weight, preferably 20 to 25% by weight, of propylheptyl acrylate (PHA), and
5 to 15% by weight, preferably 5 to 10% by weight, of lauryl acrylate (LA) and
0% by weight of acid monomers. By this means, the underlying object of the invention is particularly well achieved and a high adhesion of the adhesive compound or the adhesive tape, in particular on glass, is realized. Furthermore, the adhesive compound is particularly well suited for bonding corrosion-sensitive components, in particular comprising indium tin oxide and/or silver.

The copolymer A preferably has a weight average of the molecular weight distribution Mw according to GPC of 300 000 to 2 000 000 g/mol.

According to preferred embodiments of the invention, the copolymer A has a weight average of the molecular weight distribution Mw according to GPC of 1 000 000 to 2 000 000 g/mol, more preferably of 1 200 000 to 1 700 000 g/mol.

According to further preferred embodiments of the invention, the copolymer A has a weight average of the molecular weight distribution Mw according to GPC of 300 000 to 1 000 000 g/mol, more preferably of 300 000 to 800 000 g/mol.

Surprisingly, even with an Mw of 300 000 to 1 000 000 g/mol, very preferably of 300 000 to 800 000 g/mol, the silver nanowire compatibility is high. Surprisingly, the adhesive compound, even when the copolymer A has such an Mw, is therefore particularly suitable for bonding corrosion-sensitive components, in particular comprising indium tin oxide and/or silver.

According to preferred embodiments of the invention, the adhesive compound of the invention has an overall glass transition temperature T_{g} according to DMA (dynamic mechanical analysis) of -20 to -50°C (minus twenty to minus fifty degrees Celsius), more preferably of -30 to -45°C (minus thirty to minus forty-five degrees Celsius), in turn preferably of -35 to -43°C (minus thirty-five to minus forty-three degrees Celsius). Surprisingly, this achieves a particularly good property profile and a high adhesive strength of the adhesive compound of the invention, in particular on glass and corrosion-sensitive materials.

The term "overall glass transition temperature" refers to the glass transition temperature of the adhesive compound. This may be predominantly determined by the contained copolymer A, but may be influenced by any existing multifunctional monomers and/or additional additives.

In preferred embodiments of the invention, in which the adhesive compound contains no components other than the copolymer A and optionally one or more crosslinkers, the overall glass transition temperature of the adhesive compound corresponds to the glass transition temperature of the copolymer A. Thus the copolymer A according to preferred embodiments has a glass transition temperature according to DMA of -20 to -50°C (minus twenty to minus fifty degrees Celsius), more preferably of -30 to -45°C (minus thirty to minus forty-five degrees Celsius), in turn preferably of -35 to -43°C (minus thirty-five to minus forty-three degrees Celsius).

Preferably, the adhesive compound of the invention has a storage modulus G' at 80°C and 1 Hz of greater than 5 kPa, preferably up to 50 kPa. This gives the adhesive compound of the invention particularly good processability.

As observed above, the copolymer A of the adhesive compound can be crosslinked by means of a crosslinker. According to preferred embodiments of the invention, the adhesive compound is crosslinked by means of at least one crosslinker. Preferably, the crosslinker is selected from the group consisting of isocyanates, in particular selected from the group consisting of aliphatic polyisocyanates, silane isocyanates, acrylate isocyanates and polypropylene glycol) 2,4-toluene diisocyanate.

Suitable aliphatic isocyanates are, in particular, hexamethylene diisocyanate (HDI), 1,6-hexylene diisocyanate, isophorone diisocyanate (IPDI), 5-isocyanato-1-isocyanatomethyl-1,3,3-trimethylcyclohexane, trimethyl diisocyanate (TMDI).

For example, a suitable aliphatic polyisocyanate is available under the trade name Desmodur ^{®} N75 BA from Covestro AG.

A suitable silane isocyanate is, for example, 3-isocyanatopropyltrimethoxysilane, which is under the trade name VESTANAT^{®} EP*-IPMS from Evonik Operations.

For example, a suitable acrylate isocyanate is available under the trade name VESTANAT^{®} EP*- DC 1241 from Evonik Operations.

Preferably, in this regard the adhesive compound contains in the non-crosslinked state 0.05 to 0.2% by weight, preferably 0.05 to 0.15% by weight, more preferably 0.05 to 0.12% by weight, of crosslinkers. If the amount of crosslinkers is too high, this adversely affects the adhesion properties of the adhesive compound.

The copolymer A may also be post-crosslinkable by use of crosslinkable monomers, so-called multifunctional monomers, as also observed above. According to preferred embodiments of the invention, the adhesive compound is post-crosslinkable by means of multifunctional monomers, wherein the adhesive compound for this purpose contains the corresponding multifunctional monomers as a constituent. These multifunctional monomers are preferably selected from the group consisting of difunctional (meth)acrylates, such as 1,10-decanediol di(meth)acrylate, 1,6-hexanediol di(meth)acrylate, 1,4-butanediol di(meth)acrylate, tricyclodecanedimethylol di(meth)acrylate, (poly)ethylene glycol di(meth)acrylate, (poly)propylene glycol di(meth)acrylate, neopentyl glycol di(meth)acrylate and pentaerythritol di(meth)acrylates, and trifunctional or higher-functional (meth)acrylates such as pentaerythritol tri(meth)acrylate, dipentaerythritol hexa(meth)acrylate, trimethylolpropane tri(meth)acrylates and tetramethylolmethane tri(meth)acrylate; allyl (meth)acrylates, vinyl (meth)acrylates, divinylbenzene, epoxy acrylates, polyester acrylates, urethane acrylates, and other related building blocks. The multifunctional monomers can be used individually and in combination of two or more monomers.

Another subject of the present invention is a process for producing the adhesive compound of the invention, which comprises at least the following process steps:
a) providing a monomer composition containing 15 to 95% by weight of linear alkyl (meth)acrylates, wherein the number of carbon atoms of the alkyl radicals of the linear alkyl (meth)acrylates is 6 to 10, preferably 7 to 10, and 5 to 30% by weight of hydroxy group-containing (meth)acrylate monomers; and
b) polymerizing the monomer composition.

The polymerization of the poly(meth)acrylates from the monomer composition can be carried out according to the customary methods, in particular by conventional radical polymerizations or controlled radical polymerizations. The polymers or oligomers can be prepared by copolymerization of the monomeric components using the usual polymerization initiators and optionally chain transfer agents, wherein polymerization may take place at the usual temperatures, for example, in bulk or in solution.

Preferably, the poly(meth)acrylates are prepared by polymerization in solvents, more preferably in solvents having a boiling temperature in the range of 50 to 150°C, more preferably in the range of 60 to 120°C, using the usual amounts of polymerization initiators, wherein the polymerization initiators are generally added to the monomer composition in a proportion of about 0.01 to 5%, in particular from 0.05 to 2%, based on the mass of the monomer composition.

Suitable polymerization initiators are, for example, radical sources such as peroxides, hydroperoxides and azo compounds, e.g. dibenzoyl peroxide, cumene hydroperoxide, cyclohexanone peroxide, di-t-butyl peroxide, cyclohexylsulfonyl acetyl peroxide, diisopropyl percarbonate, t-butyl peroctoate, or benzopinacol.

Particularly preferred as a radical initiator is 2,2'-azobis(2-methylbutyronitrile), which, for example, is available under the trade name Vazo67 from Nouryon, or 2,2-azobis(2,4-dimethylvaleronitrile), which, for example, is available under the trade name Vazo52 from Nouryon. In particular, alcohols such as methanol, ethanol, n- and iso-propanol, n- and isobutanol, preferably isopropanol and/or isobutanol, and hydrocarbons such as toluene and in particular benzines with a boiling temperature in the range of 60 to 120°C, are candidate solvents. In particular, ketones, such as acetone, methyl ethyl ketone and methyl isobutyl ketone, and esters, such as ethyl acetate, for example, may be used, and also mixtures of these solvents.

For the process of the invention, all the above embodiments for the adhesive compound of the invention are valid. In particular, it is understood that preferred monomers are also preferred for the process of the invention and are also provided in step a) or prior to the polymerization according to step b). The same applies to the amount or weight proportion of the respective monomer types.

Another subject of the invention is, as observed above, an adhesive compound which is produced by the process of the invention. For the produced adhesive compound of the invention, all the above observations for the adhesive compound of the invention are also valid.

Another subject of the invention is, as observed above, an adhesive transfer tape comprising the adhesive compound of the invention, including all embodiments.

For the purposes of this invention, the general term "adhesive tape" comprises all flat structures whose extent in two spatial directions (x-direction and y-direction; length and width) is substantially greater than in the third spatial direction (z-direction; thickness) such as films or film portions, tapes with extended length and limited width, tape portions, diecuts, labels and the like.

An adhesive transfer tape is, as the skilled person knows, an adhesive tape without a carrier. In the case of an adhesive transfer tape, the adhesive compound is instead put on before application between flexible liners, which are provided with a release layer and/or have anti-adhesive properties. For application, a liner is regularly first removed, the adhesive compound is applied and then the second liner is removed. The adhesive composition can thus be used directly for bonding of two surfaces.

The adhesive transfer tape according to the invention preferably has a layer thickness, measured in the z-direction, of 15 to 300 µm, preferably 25 to 200 µm.

Another subject is, as observed at the outset, the use of the adhesive compound of the invention, including all embodiments, for bonding articles or components in electronic devices and/or in motor vehicles, such as more particularly displays, holographic optical elements, lenses and glasses. This also includes the bonding of transparent elements, in particular displays, for augmented reality and virtual reality applications. In particular, switchable glasses are included in the case of glasses.

Preferably, the adhesive compound of the invention is used for bonding corrosion-sensitive materials or components comprising corrosion-sensitive materials. Corrosion-sensitive materials are, for example and in particular, indium tin oxide and silver.

### Test Methods

Unless stated otherwise, all measurements are conducted at 23°C and 50% relative air humidity.

### Thickness

The thickness of an adhesive compound layer can be determined by determining the thickness of a section, defined in terms of its length and width, of such an adhesive compound layer applied to a liner, minus the (known or separately determinable) thickness of a section of the same dimensions of the liner used. The thickness of the adhesive compound layer can be determined with accuracies of less than 1 µm deviation using commercially available thickness gauges (sensor test devices). If thickness fluctuations are detected, the mean value of measurements at not less than three representative locations is indicated, thus in particular not measured at pinches, folds, specks and the like.

### Adhesion

To determine the peel adhesion force, glass plates are used as a defined adhesion base. The adhesive compound to be examined, in the form of a 50 µm thick adhesive compound layer which is provided on the rear with a 50 µm PET film for stabilization, is cut to a width of 20 mm and a length of about 25 cm, provided with a handling section and immediately afterwards the selected adhesion base is pressed on. Immediately afterwards, the sample prepared in this way is stored in an autoclave for 30 min at 40°C and 5 bar pressure. The sample treated in this way is then stored for 24 h in a conditioning room with defined conditions (23°C and 50% relative air humidity). The previously bonded surface element is peeled off at an angle of 180° at 300 mm/min from the adhesion base with a tensile test device (Zwick) and the required force is measured. The measured value (in N/cm) is obtained as the average value from three individual measurements.

### Adhesion after plasma treatment

Plasma can be used to pretreat both the substrate to be bonded and the open adhesive compound side. For this purpose, plasma is produced using the DBD (Dielectric Barrier Discharge) method. A device from AIK DBD plasma is used for this purpose. The distance between the nozzle and the treated surface is 2.5-3 mm. The gas used is set at a ratio of N2 280 l/min and air 2.5 l/min. The nozzle is then guided once over the substrate to be treated at a speed of 30 mm/s. After pretreatment with plasma, the open adhesive compound must be bonded directly to the substrate as described above. The same applies to the pretreated substrate, which must also be bonded directly.

Otherwise, the adhesion is measured as indicated under the method "Adhesion".

### Glass transition temperature according to dynamic mechanical analysis (DMA) and G' at 80°C and 1 Hz

### Test Method A - Dynamic Mechanical Analysis (DMA) for determining the glass transition temperature T_{g} from storage modulus G' and loss modulus G":

The storage modulus G' and loss modulus G" of the pressure-sensitive adhesive are determined by means of a dynamic mechanical analysis (DMA).

The measurements are made with the shear stress-controlled rheometer DSR 200 N from Rheometric Scientific (Anton Paar 702 MultiDrive) in an oscillation test under a sinusoidally oscillating shear stress in a plate-plate arrangement (parallel plates system; steel 1.4418).

Preparation of the sample: 2 minutes at 50°C followed by heating or cooling to the measuring temperature.

The storage modulus G' and the loss modulus G" are determined at a frequency of 1 Hz and with a temperature sweep of -60°C to +130°C (-55 to 170°C). For this purpose, the temperature is raised from -60°C to +130°C at 10°C/min (-55 to 170°C // 2.5°C/min).

This is used to determine G' at 80°C and 1 Hz.

G' and G" are defined as follows: G' = T/γ•cos(δ) (τ = shear stress, γ = deformation, δ = phase angle = phase shift between shear stress and deformation vector). G" = T/γ•cos(δ) (τ = shear stress, γ = deformation, δ = phase angle = phase shift between shear stress and deformation vector).

The thickness of the measured sample is always between 0.9 and 1.1 mm (1 +/- 0.1 mm) (at least 0.5 mm; otherwise no meaningful modulus determination // ideally 1 mm). The sample diameter is 25 mm (12 mm) in each case.

Preloading is carried out with a load of 3 N. The stress of the sample bodies is 2500 Pa for all measurements. (Shear deformation and axial force "Normal force F N" are adapted to each sample)

To ascertain the glass transition temperature Tg (DMA), the temperature at which the loss factor tanδ (tanδ = G"/G') has a maximum value is determined. The necessary data comes from the temperature sweep performed at a frequency of 1 Hz (see description above).

### Silver nanowire compatibility test SNW

To investigate the Silver NanoWire (SNW) compatibility, a laminate is produced from an SNW-containing film (ActiveGrid^{™} film from C3 Nano), the pressure-sensitive adhesive (PSA) to be tested and a PET liner. The laminate has dimensions of 2.5 x 2.5 cm, with the dimensions of the SNW-containing film being 2.5 x 3.5 cm. The areas not covered with the PSA (1 cm x 2.5 cm) are each coated with a silver paste. The specimens obtained in this way are stored at 60°C and 95% relative humidity (60/95).

To determine the SNW compatibility, the resistance of the SNW film is measured by applying 2 probes to the locations not covered by the PSA and coated with silver paste, using an Agilent True RMS Multimeter, before commencement of storage at 60/95 (initial value) and after 28 d storage at 60/95 (28 d value), in Ω. The SNW compatibility is ascertained by determining the percentage change in resistance after 28 days at 60/95 compared to the initial value. The higher the change ΔSNW, the lower the compatibility. In the context of the present invention, values of less than 10% are therefore targeted. Slightly negative values here should also be considered positive, as should 0%.

### Dielectric constant (DC)

The relative dielectric constant of the adhesive compound to be tested is determined from a layer of adhesive compound with a thickness of 1000 µm +/- 50 µm using an Agilent E4980A LCR measuring instrument by means of the capacitance method between parallel plates at a frequency of 100 kHz, a temperature of 25°C and 50% relative humidity.

### Mw according to GPC

The weight average of the molecular weight distribution, also called molar mass distribution, Mw and the number average of the molar mass distribution Mn were determined by gel permeation chromatography (GPC). THF with 0.1% by volume trifluoroacetic acid was used as eluent. The measurement was carried out at 25°C. The guard column used was PSS-SDV, 10 µ ID 8.0 mm x 50 mm. The column combination PSS-SDV, 10 µ, LinearXL-tesa+ with ID 8.0 mm x 300 mm and PSS-SDV, 10 µ, 10⁷ A with ID 8.0 mm x 50 mm were used for separation. The sample concentration was approximately 0.5 g/l, the flow rate 0.5 ml per minute. Measurement was made against polystyrene standards and converted to polymethyl methacrylate molar mass equivalents by universal calibration.

### Transmission

The transmission of the adhesive compound is determined from a bubble-free adhesive compound layer, unless otherwise specified with a thickness of 50 µm, according to ASTM D1003 - 13 (Procedure A (BYK Gardner Haze Gard Plus), standard illuminant D65). The transmission of the adhesive compound is determined via the VIS spectrum, i.e. the wavelength range of the measured spectrum comprises all wavelengths between 800 nm and 400 nm with a resolution of 1 nm. A blank channel measurement is performed as a reference over the entire wavelength range. To specify the result, the transmission measurements are averaged in the specified range. A correction of interfacial reflection losses is made. The transmission of other layers is determined analogously and refers to the actual thickness of the layer.

### Haze

The haze of the adhesive compound is determined in the form of a bubble-free adhesive compound layer with a thickness of 50 µm also as described in ASTM D1003 - 13 using a BYK Gardner Haze Gard Plus. The haze value describes the proportion of the light transmitted which is scattered forward at wide angles by the sample being irradiated. Thus, the haze value quantifies material defects in the surface or the structure that disrupt clear transparency. The standard entails the measurement of four transmission measurements. The degree of light transmittance is calculated for each transmission measurement. The four degrees of transmittance are converted to the percentage haze value. The haze of other layers is determined analogously and refers to the actual thickness of the layer.

A number of examples are described below to further clarify the invention.

Initially, copolymers of type A were produced. The underlying monomer compositions are shown in Tables 1 and 2. The meanings of the abbreviations are apparent from the general part of the description or from the description of the preparation of the examples. The quantities are figures of the amounts in per cent by weight.

The examples according to the invention are marked with "I".

In addition, some comparative examples, marked with "C", are given.

The copolymers were prepared by the monomers being combined in the corresponding weight ratios and then polymerized as described below.

### Example I1

A conventional reactor for radical polymerizations is charged with 160 g of n-butyl acrylate, 40 g of 4-hydroxybutyl acrylate, 120 g of n-octyl acrylate, 80 g of ethyldiglycol acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I2

A conventional reactor for radical polymerizations is charged with 160 g of n-butyl acrylate, 40 g of 4-hydroxybutyl acrylate, 80 g of n-octyl acrylate, 120 g of propylheptyl acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I3

A conventional reactor for radical polymerizations is charged with 160 g of n-butyl acrylate, 40 g of 4-hydroxybutyl acrylate, 200 g of n-octyl acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I4

A conventional reactor for radical polymerizations is charged with 80 g of n-butyl acrylate, 80 g of 2-ethylhexyl acrylate, 40 g of 4-hydroxybutyl acrylate, 200 g of n-octyl acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I5

A conventional reactor for radical polymerizations is charged with 72 g of n-butyl acrylate, 8 g of dimethylacrylamide, 40 g of 4-hydroxybutyl acrylate, 80 g of n-octyl acrylate, 120 g of propylheptyl acrylate, 80 g of ethyldiglycol acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I6

A conventional reactor for radical polymerizations is charged with 120 g of n-butyl acrylate, 80 g of 4-hydroxybutyl acrylate, 200 g of n-octyl acrylate and 327 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I7

A conventional reactor for radical polymerizations is charged with 36 g of 4-hydroxybutyl acrylate, 364 g of n-octyl acrylate and 666 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I8

A conventional reactor for radical polymerizations is charged with 60 g of 2-ethylhexyl acrylate, 36 g of 4-hydroxybutyl acrylate, 666 g of n-octyl acrylate and 327 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I9

A conventional reactor for radical polymerizations is charged with 116 g of 2-ethylhexyl acrylate, 36 g of 4-hydroxybutyl acrylate, 666 g of n-octyl acrylate and 327 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I10

A conventional reactor for radical polymerizations is charged with 116 g of 2-ethylhexyl acrylate, 36 g of 4-hydroxybutyl acrylate, 126 g of n-octyl acrylate, 94 g of propylheptyl acrylate, 28 g of lauryl acrylate and 489 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I11

A conventional reactor for radical polymerizations is charged with 116 g of 2-ethylhexyl acrylate, 36 g of 4-hydroxybutyl acrylate, 220 g of n-octyl acrylate, 28 g of lauryl acrylate and 489 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example I12

A conventional reactor for radical polymerizations is charged with 116 g of 2-ethylhexyl acrylate, 36 g of 4-hydroxybutyl acrylate, 220 g of n-heptyl acrylate (n-Hept-A), 28 g of lauryl acrylate and 600 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example C1

A conventional reactor for radical polymerizations is charged with 160 g of n-butyl acrylate, 40 g of 4-hydroxybutyl acrylate, 120 g of propylheptyl acrylate, 80 g of ethyldiglycol acrylate and 400 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example C2

A conventional reactor for radical polymerizations is charged with 116 g of 2-ethylhexyl acrylate, 36 g of 4-hydroxybutyl acrylate, 28 g of lauryl acrylate, 94 g of propylheptyl acrylate, 126 g of di(ethylene glycol) 2-ethylhexyl ether acrylate (EH(EO)EA) and 327 g of ethyl acetate/2-butanone (57/43). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

### Example C3

A conventional reactor for radical polymerizations is charged with 28 g of n-butyl acrylate, 36 g of 4-hydroxybutyl acrylate, 116 g of iso-octyl acrylate (iso-OA), 94 g of propylheptyl acrylate, 126 g of di(ethylene glycol) 2-ethylhexyl ether acrylate and 489 g of ethyl acetate/2-butanone (70/30). After 45 minutes of passage of nitrogen gas with stirring, the reactor is heated to 70°C and 0.2 g of Vazo67 is added. The outer heating bath is then regulated in such a way that the reaction mixture is kept constantly at 65°C. After 1 h, 0.2 g of Vazo67 is added again and after 1.25 h, 1.5 h, 2 h, and 3 h, dilution is performed in each case with 80 g of ethyl acetate/2-butanone mixture. After 10 h, the reaction temperature is increased to 80°C. After a reaction time of 18 h, the polymerization is terminated and the contents cooled to room temperature.

The copolymers obtained incl. solvents are then blended with the Desmodur^{®} N75 BA crosslinker from Covestro AG. The amounts of "N75" are also given in Tables 1 and 2 and refer to the respective polymer without solvent. For the sake of simplicity, the amounts are specified so that the sum of the weight per cent of the monomers in each example results in 100, while the crosslinker amount is additionally specified.

The resulting compounds are each coated onto a 50 µm thick siliconized PET liner. Then drying takes place first for 15 minutes at room temperature, followed by 15 minutes at 120°C in the drying oven. The thickness after coating and drying is 50 µm. The specimens are stored for 3 days at 60°C before they are further measured and evaluated.

Peel adhesion tests were carried out with the adhesive compounds produced. The results are also set out in Tables 1 and 2. In addition, for some samples, a compatibility test for corrosion-sensitive materials comprising silver was performed using the "SNW" method and for some of these examples the dielectric constant (DC) was additionally determined. These results are summarized in Table 3.

The tests were carried out in accordance with the methods described above.

In Table 1, the values for adhesion and adhesion after plasma treatment are each normalized to the values of Comparative Example C1, which are 100%. Values of more than 100% mean a higher measured peel adhesion and thus an improved performance. In Table 2, the values are normalized accordingly to those of Comparative Example C2, which are also indicated with 100%.

For examples where data was not available for some properties, the tables indicate "N/A" (not available).

When comparing the adhesive compounds of the invention with the respective comparative examples, it is evident that the compounds of the invention have improved adhesion to glass, both without and after a plasma treatment.

Furthermore, the examples according to the invention show a high SNW compatibility. It is surprising here that even the systems with a lower Mw of the copolymer of 300 000 to 1 000 000 g/mol, more preferably of 300 000 to 800 000 g/mol, have a high silver nanowire compatibility. This could not have been expected from Comparative Example C2.

The examples according to the invention also show a sufficiently low dielectric constant, where in the context of the present invention values of less than 10, preferably less than 6, are considered advantageous.

Furthermore, the examples according to the invention show good processability, which is recognizable from, among others, the values for G' at 80°C and 1 Hz, since all values of these values are greater than 5 kPa.

**Table 1**

| **Exa mple** | **HBA** | **DMAA** | **n-BA** | **2-EHA** | **PHA** | **n-OA** | **EDGA** | **N75 [%]** | **Mw [g/mol]** | **Tg (DMA) [°C]** | **G' (80°C; 1 Hz) [kPa]** | **Adhesion [%]** | **Adhesion after plasma [%]** | **Transmission [%]** | **Haze [%]** |
|---|---|---|---|---|---|---|---|---|---|---|---|---|---|---|---|
| V1 | 10 | 0 | 40 | 0 | 30 | 0 | 20 | 0.085 | 1400000 | -38 | 15 | 100 | 100 | 95 | 0.16 |
| E1 | 10 | 0 | 40 | 0 | 0 | 30 | 20 | 0.085 | 1600000 | -38 | 16 | 140 | N/A | N/A | N/A |
| E2 | 10 | 0 | 40 | 0 | 30 | 20 | 0 | 0.085 | 1600000 | -38 | 16 | 130 | 146 | N/A | N/A |
| E3 | 10 | 0 | 40 | 0 | 0 | 50 | 0 | 0.085 | 1600000 | -39 | 16 | 150 | N/A | N/A | N/A |
| E4 | 10 | 0 | 20 | 20 | 0 | 50 | 0 | 0.085 | 1500000 | -39 | 14 | 170 | N/A | N/A | N/A |
| E5 | 10 | 2 | 18 | 0 | 30 | 20 | 20 | 0.085 | 1600000 | -38 | 12 | 210 | 123 | N/A | N/A |
| E6 | 20 | 0 | 30 | 0 | 0 | 50 | 0 | 0.085 | 1500000 | -36 | 17 | 325 | 135 | 95 | 0.11 |

**Table 2**

| **Exa mple** | **HBA** | **LA** | **n-BA** | **2-EHA** | **PHA** | **n-OA** | **iso-OA** | **EH(E O)EA** | **n-Hept -A** | **N75 [%]** | **MW [g/mol]** | **Tg (DMA) [°C]** | **G' (80°C; 1 Hz) [kPa]** | **Adhes ion [%]** | **Adhesion after plasma [%]** | **Transmis sion [%]** | **Haze [%]** |
|---|---|---|---|---|---|---|---|---|---|---|---|---|---|---|---|---|---|
| V2 | 9 | 7 | 0 | 29 | 23.5 | 0 | 0 | 31.5 | 0 | 0.3 | 750000 | -43 | 6 | 100 | 100 | >99 | 0 |
| V3 | 9 | 0 | 7 | 0 | 23.5 | 0 | 29 | 31.5 | 0 | 0.3 | 730000 | -41 | N/A | 133 | N/A | N/A | N/A |
| E7 | 9 | 0 | 0 | 0 | 0 | 91 | 0 | 0 | 0 | 0.3 | 450000 | -39 | N/A | 333 | 228 | N/A | N/A |
| E8 | 9 | 0 | 0 | 15 | 0 | 76 | 0 | 0 | 0 | 0.3 | 420000 | -39 | N/A | 467 | 210 | N/A | N/A |
| E9 | 9 | 0 | 0 | 29 | 0 | 62 | 0 | 0 | 0 | 0.3 | 360000 | -40 | N/A | 500 | N/A | N/A | N/A |
| E10 | 9 | 7 | 0 | 29 | 23.5 | 31.5 | 0 | 0 | 0 | 0.3 | 500000 | -41 | 6 | 500 | 141 | N/A | N/A |
| E11 | 9 | 7 | 0 | 29 | 0 | 55 | 0 | 0 | 0 | 0.3 | 680000 | -41 | 8 | 500 | 176 | >99 | 0 |
| E12 | 9 | 7 | 0 | 29 | 0 | 0 | 0 | 0 | 55 | 0.3 | 510000 | -45 | N/A | 533 | 134 | >99 | 0.2 |

**Table 3**

| **Example** | **Δ SNW [%]** | **DC** |
|---|---|---|
| C1 | -1 | 5.64 |
| I2 | -3 | N/A |
| I5 | -2 | N/A |
| I6 | -2 | 5.97 |
| C2 | 327 | 4.55 |
| I7 | -1 | N/A |
| I8 | -3 | N/A |
| I10 | -3 | N/A |
| E11 | 2 | 4.23 |
| E12 | 5 | 4.32 |

## Claims

1. Optically transparent adhesive compound for bonding displays, holographic optical elements, lenses and glasses,
wherein the adhesive compound contains 80 to 100% by weight of at least one (meth)acrylate-containing copolymer A,
wherein the copolymer A is composed of 15 to 95% by weight of linear alkyl (meth)acrylate monomers, wherein the number of carbon atoms of the alkyl radicals of the linear alkyl (meth)acrylate monomers is 6 to 10, preferably 7 to 10, and
wherein the copolymer A is composed of 5 to 30% by weight of hydroxy group-containing (meth)acrylate monomers,
and wherein the adhesive compound has a haze value of less than 5%, preferably 0% to less than 1%, and a transmission at 400 nm to 800 nm of more than 90%, preferably more than 95%, more preferably 98 to 100%, very preferably more than 99 to 100%, each measured according to ASTM D1003-13.

2. Adhesive compound according to Claim 1, **characterized in that** the copolymer A is composed of 0 to a maximum of 0.5% by weight, preferably 0 to a maximum of 0.3% by weight, more preferably 0% by weight, of acid monomers, such as in particular (meth)acrylic acid and photoacids, such as triarylsulfonium hexafluorophosphate.

3. Adhesive compound according to any one of Claims 1 or 2, **characterized in that** the copolymer A is composed of 15 to 95% by weight of linear alkyl (meth)acrylate monomers, wherein the linear alkyl (meth)acrylate monomer is selected from the group consisting of n-heptyl acrylate, n-heptyl methacrylate, n-octyl methacrylate and n-octyl acrylate, wherein n-octyl acrylate is particularly preferred.

4. Adhesive compound according to any one of Claims 1 or 2, **characterized in that** the copolymer A is composed of 15 to 95% by weight of linear alkyl (meth)acrylate monomers, wherein the linear alkyl (meth)acrylate monomers are a mixture of at least two different linear alkyl (meth)acrylate monomers having a number of carbon atoms of the alkyl radicals of 6 to 10, preferably 7 to 10, wherein a mixture of n-octyl acrylate and n-decyl acrylate is particularly preferred.

5. Adhesive compound according to any one of the preceding claims, **characterized in that** the copolymer A is composed of 15 to 85% by weight, more preferably from 30 to 80% by weight, very preferably from 30 to 55% by weight of linear alkyl (meth)acrylate monomers, wherein the number of carbon atoms of the alkyl radical of the linear alkyl (meth)acrylate monomers is 6 to 10, preferably 7 to 10.

6. Adhesive compound according to any one of the preceding claims, **characterized in that** the copolymer A is composed of 8 to 30% by weight, more preferably 8 to 25% by weight, very preferably 15 to 25% by weight or 8 to 12% by weight of hydroxy group-containing (meth)acrylate monomers.

7. Adhesive according to any one of the preceding claims, **characterized in that** the hydroxy group-containing (meth)acrylate monomer is a hydroxyalkyl (meth)acrylate, wherein preferably the number of carbon atoms of the alkyl radical is 2 to 25, preferably 2 to 20, more preferably 2 to 10.

8. Adhesive compound according to any one of the preceding claims, **characterized in that** the hydroxy group-containing (meth)acrylate monomer is selected from the group consisting of 4-hydroxybutyl acrylate, 2-hydroxyethyl acrylate, 2-hydroxypropyl acrylate,
2-hydroxybutyl acrylate, 2-hydroxyethyl methacrylate, 2-hydroxypropyl methacrylate,
2-hydroxybutyl methacrylate, 2-hydroxyisopropyl acrylate, 2-hydroxyethylacrylamide, N-hydroxypropylacrylamide, more preferably 4-hydroxybutyl acrylate, 2-hydroxyisopropyl acrylate and 2-hydroxyethyl acrylate, very preferably 4-hydroxybutyl acrylate.

9. Adhesive according to any one of the preceding claims, **characterized in that** the copolymer A is composed of 10 to 70% by weight, preferably 25 to 60% by weight, of monomers selected from the group consisting of n-butyl acrylate (n-BA), ethylhexyl acrylate (EHA), propylheptyl acrylate (PHA), ethyldiglycol acrylate (EDGA), di(ethylene glycol) 2-ethylhexyl ether acrylate EH(EO)EA, heptadecyl acrylate (iso-C17 acrylate).

10. Adhesive according to any one of the preceding claims, **characterized in that** the copolymer A is composed of a maximum of 5% by weight, more preferably a maximum of 2% by weight, and in turn preferably 0% by weight, of monomers the homopolymer of which has a glass transition temperature of more than 50°C, and preferably 0% by weight of isobornyl acrylate (IBOA), isobornyl methacrylate, methyl methacrylate, tert-butyl acrylate (t-BA), tert-butyl methacrylate, N,N-dimethylacrylamide (DMAA), dihydrodicyclopentadienyl acrylate, benzyl methacrylate, cyclohexyl methacrylate, ethyl methacrylate, isobutyl methacrylate, tert-butylcyclohexyl methacrylate, alpha-methylstyrene, itaconic anhydride, maleic anhydride, N-tert-butylacrylamide, N-vinylcaprolactam, N-vinylpyrrolidone, styrene and acrylamide.

11. Process for producing the adhesive compound according to any one of the preceding claims, **characterized in that** it comprises at least the following process steps:
a) providing a monomer composition containing 15 to 95% by weight of linear alkyl (meth)acrylates, wherein the number of carbon atoms of the alkyl radicals of the linear alkyl (meth)acrylates is 6 to 10, preferably 7 to 10, and 5 to 30% by weight of hydroxy group-containing (meth)acrylate monomers; and
b) polymerizing the monomer composition.

12. Adhesive transfer tape comprising the adhesive compound according to any one of Claims 1 to 10.

13. Adhesive transfer tape according to Claim 12, **characterized in that** it has a layer thickness of 15 to 300 µm, preferably 25 to 200 µm.

14. Use of the adhesive compound according to any one of Claims 1 to 10 for bonding articles or components in electronic devices and/or in motor vehicles, such as more particularly displays, holographic optical elements, lenses and glasses.
